# EUROPEAN PATENT SPECIFICATION

(11) **EP 3 019 268 B1**
(45) Date of publication and mention of the grant of the patent: **27.05.2020**
(21) Application number: 14822890.1
(22) Date of filing: 10.07.2014
(51) Int. Cl.: B01D 53/72, B01D 53/81, E21F 7/00, B01J 8/00

(54) **METHOD FOR VENTILATION AIR METHANE MITIGATION**
VERFAHREN ZUR VERMINDERUNG VON METHAN IN VENTILATIONSABLUFT
PROCÉDÉ POUR LA RÉDUCTION DE LA TENEUR EN MÉTHANE DANS L'AIR DE VENTILATION

(30) Priority: 11.07.2013 AU 2013902564
(43) Date of publication of application: 18.05.2016
(73) Proprietor: The University of Newcastle, Callaghan, New South Wales 2308 (AU)
(72) Inventor: SHAH, Kalpit Vrajeshkumar, Callaghan, New South Wales 2308 (AU); MOGHTADERI, Behdad, Callaghan, New South Wales 2308 (AU); DOROODCHI, Elham, Callaghan, New South Wales 2308 (AU)
(74) Representative: Bridle, Andrew Barry
(86) International application number: PCT/AU2014/000713
(87) International publication number: WO 2015/003219

(56) References cited:
- WO-A1-2013/044308
- CN-U- 202 237 711
- GB-A- 2 058 826
- US-A1- 2009 315 388
- US-A1- 2010 086 456
- US-A1- 2011 286 902
- US-A1- 2012 264 068
- US-A1- 2013 192 974
- SU ET AL.: 'An assessment of mine methane mitigation and utilisation technologies' PROGRESS IN ENERGY AND COMBUSTION SCIENCE vol. 31, 2005, pages 123 - 170, XP027748468

## Description

### Background of the invention

This invention relates to the removal of ventilation air methane using a mineral looping reactor (MLR) or stone dust looping reactor (SDLR) and has been devised not only to remove methane from ventilation air in coal mines at lower operating costs but also to capture CO₂ and thus reduce emissions.

Globally, ventilation methane exceeds the equivalent of 237 million tonnes of carbon dioxide annually. Of this amount, around 10% has been emitted in Australia. Many countries including Australia are therefore developing emission abatement policies or step change technologies to reduce the emissions stemming from methane released during coal mining as low concentration Ventilation Air Methane (VAM). There are a number of technologies available which can reduce the VAM emissions including the applicants' own process for chemical looping removal of VAM which is the subject of International Patent Application PCT/AU2012/001173 published as WO 2013/044308, the contents of which are hereby incorporated.

VAM can be used as combustion air for conventional power stations, gas turbine/engines, and in kiln processes. Additionally, the lean-burning turbines specifically designed to handle low methane concentration VAM use compression to lower the concentration of methane required for ignition, and catalytic turbines, which employ a catalyst to lower the required temperature of ignition. Both of these processes require some enrichment of the gas stream to operate on VAM which can be achieved by mixing some of the pre-mining drainage gas or gasified coal slurry. The lean-burning turbines and catalytic turbines have potential to generate power.

However, some of the mine sites where VAM is generated have very low power rates where additional power generation option may not be found very attractive. Also such technology has limited application due to handling large volumes of air with low and fluctuating concentration of methane. Moreover, distance between the possible power plant and mine site VAM source is a critical factor in evaluating economic feasibility of VAM utilization for heat and power generation. Therefore, VAM destruction methods are also being developed. Thermal flow reversal reactors (TFRR), Catalytic flow reversal reactors (CFRR), and Catalytic monolith reactors (CMR) are the technologies developed to mainly destruct VAM but have less potential to generate energy as a side benefit. They all employ heat exchange to bring the VAM to the auto-ignition temperature of methane and use the heat of reaction to compensate for thermal losses through the outlet air.

Open flares are also one of the expensive options to destruct VAM as they need minimum 5% methane to operate. Oxidative coupling to produce the ethylene or other liquid hydrocarbon and catalytic combustion, though attractive options, utilise expensive catalysts made of Au, Ag, Pt, Pd which may deactivate in high dust environment. Furthermore, CH4 conversion rate is slow with such catalysts at low temperature. Activated carbon or carbon composites can also arrest methane in their pores to a certain extent at low temperature which then can be regenerated by releasing methane. However, extent of adsorption is very low and the amount of inventory needed is high which makes their commercial use impractical.

### Summary of the invention

According to a first aspect of the present invention, there is provided a method of removing methane from ventilation air including the steps of:
i) reacting a ventilation air methane stream with a carbon dioxide scavenger to form a mineral carbonate; and
ii) decomposing the mineral carbonate back to a mineral or mineral oxide.

Preferably step i) is performed in a carbonation reactor and step ii) is performed in a separate calcination reactor, with carbon dioxide being captured from the calcination reactor.

Preferably step i) and step ii) occur at the same temperature, without carbon dioxide capture.

In one form of the invention step i) and step ii) occur in the same reactor.

In one form of the invention the decomposed mineral carbonate is reused as the carbon dioxide scavenger in step i).

In another form of the invention metal or metal oxides having a carbonation tendency are used as the carbon dioxide scavenger.

In another form of the invention the carbon dioxide scavenger is a mineral or mineral waste having a carbonation tendency.

In some instances any of the metal, metal oxides, mineral or mineral waste having a carbonation tendency is used once only in the reaction process.

In a still further form of the invention the carbon dioxide scavenger is formed by stone dust rich in calcium carbonate.

Preferably the stone dust is sourced from or adjacent to a mine site where the ventilation air methane is generated.

Preferably additional heat generated during the reaction process, is used for electricity generation or heating or cooling purposes.

### Brief description of the drawings

Notwithstanding any other forms that may fall within its scope, one preferred form of the invention will now be described by way of example only with reference to the accompanying drawings in which:
Figure 1 is a graph showing calcium carbonate decomposition over time.
Figure 2 is a graph showing ventilation air methane (VAM) carbonation reaction over time.
Figure 3 shows a first prototype reactor without CO₂ capture;
Figure 4 shows a second prototype reactor both with and without CO₂ capture;
Figure 5 shows a third prototype reactor for CO₂ capture;
Figure 6 shows a fourth prototype reactor for CO₂ capture;
Figure 7 shows the first and second reaction steps in the fourth prototype reactor for CO₂ capture;
Figure 8 is a block diagram showing integration of MCLR/SDLR to utilise VAM for heating, cooling or electricity generation applications;
Figure 9 shows the integration of the MCLR/SDLR process with steam and solar inputs with CO2 capture;
Figure 10 shows the integration of the MCLR/SDLR process with drainage gas, natural gas or coal as fuel with CO2 capture;
Figure 11 shows the integration of the MCLR/SDLR process with drainage gas, natural gas or coal without CO2 capture; and
Figure 12 shows the integration of the MCLR/SDLR process with drainage gas, natural gas or coal without CO2 capture.

### Preferred embodiments of the invention

The present invention using technologies referred to as "Mineral carbonate looping reactor (MCLR)" or "Stone dust looping reactor (SDLR)" is a new VAM destruction technology which can operate at lower costs compared to conventional technologies due to its low operating temperature. Moreover, it has an advantage of further reduction of emissions by capturing CO₂ as by-product which is otherwise not captured in the current VAM utilization or destruction technologies due to the very dilute concentration in the VAM exit flue gas stream. The MCLR /SDLR processes suggested here can be explained by reactions 1 and 2.

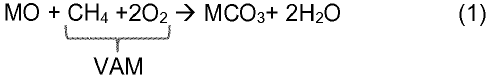

MCO₃ → MO+ CO₂ (2)

The reaction 1 is called combustion + carbonation where mineral/mineral oxide (MO) reacts with VAM stream to form mineral carbonate. This reaction is exothermic and releases energy. This reaction was found to occur at temperatures lower than methane auto ignition temperature. This may be due to catalytic effect of mineral/mineral oxide for low temperature combustion of methane as well as simultaneous capture of CO₂ as mineral carbonate. In the regeneration reaction as explained by reaction 2, the carbonates are decomposed back to mineral/mineral oxide which then can be used again for methanation reaction. This reaction is endothermic and requires energy. The CO₂ released during reaction 2 can be captured and stored or used as a by-product.

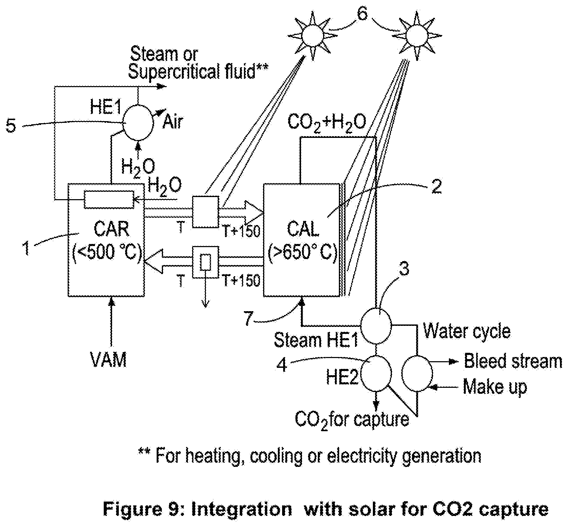

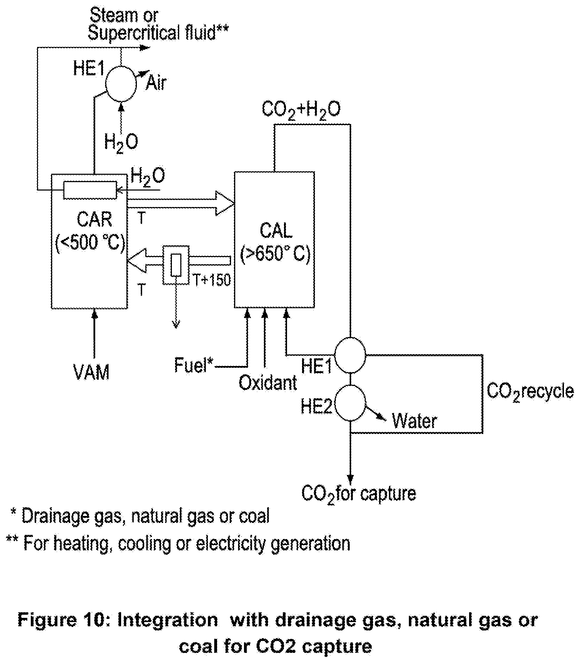

From the energy balance point of view, the heat released from reaction 1 can be utilized for the heat required by reaction 2. However, reaction 1 generates additional heat than the requirement by reaction 2 which further can be utilized/recovered to generate heating, electricity or cooling purposes. These configurations can be seen in the embodiments shown in Figures 9 and 10 of the accompanying drawings.

Generally, both MCLR/SDLR processes are self-sufficient and do not need additional heat when the methane concentration in VAM is above 0.2 vol%.

While the present invention covers two processes referred to as "Mineral carbonate looping reactor" (MCLR) or "Stone dust looping reactor" (SDLR), both processes undergo the same reactions referred to above. However, they use different CO₂ scavengers depending on resources readily available at the particular site of application.

### Mineral carbonate looping reactor (MCLR)

All metals/metal oxides having a carbonation reaction (i.e. carbonate formation) tendency can be used as CO₂ scavengers in the MCLR processes. Examples are PbO, CaO, MgO, Na, K, ZnO, MnO, PbO, Li₂O, Sr, Fe and CuO.

Any mineral which has carbonation reaction tendency can also be used in the MCLR process. Some examples are shown below:

| | |
|---|---|
| Mg Olivine | Mg₂SiO₄ |
| Mg Serpentine | Mg₃Si₂O₅(OH)₄ |
| Wollastonite | CaSiO₃ |
| Basalt | Varies |
| Magnetite | Fe₃O₄ |
| Brucite | Mg(OH)2 |
| Forsterite | Mg2SiO4 |
| Harzburgite | CaMgSi2O6 |
| Basalt | Formula vary |
| Orthopyroxene | CaMgSi2O6 |
| Dunite | Mg2SiO3 with impurities |

The mineral wastes such as steel making slags, blast furnace slag, construction demolition waste, coal and biomass bottom ash, fly ash with unburnt carbon, oil shale ash, paper mill wastes, incineration ash and municipal solid waste ash can also be used. The unburnt carbon in fly ash physically adsorbs methane and the minerals in fly ash catalyse the methane combustion at low temperatures with simultaneous CO₂ capture.

All the above mentioned minerals/mineral waste can be used as solids or in the form of aqueous solution in once through or in recycling mode.

### Stone dust looping reactor (SDLR)

Stone dust rich in calcium carbonate, used at mine sites as a primary inert agent in the prevention of coal dust explosions can be used as a CO₂ carrier in the MCLR process wherein the reactor/process is named Stone Duct Looping Reactor (SDLR). It is most effective by using fresh/used stone dust from mine sites for VAM mitigation. After several cycles in the SDLR process, the stone dust will lose its reactivity due to extensive sintering/agglomeration. The sintered/agglomerated used stone dust lumps from SDLR reactor can then be processed further in a ball mill for regrinding before their reuse in the process, or utilized by the mine to avoid coal dust explosions. In this manner, the SDLR process has a zero to low raw material cost for the CO₂ carrier as it is a resource readily available and reusable at mine sites.

Both above processes (MCLR and SDLR) are expected to operate between 300-700°C which is well below the auto-ignition temperature of dilute CH4. With proper thermal integration with 80% heat recovery, the processes are expected to require <0.1 m3 CH4 as an additional source of energy per 1000 m3 of VAM theoretically. Moreover, both processes will provide an option to capture and store or utilize CO₂ as a by-product which will further reduce the emissions to a greater extent.

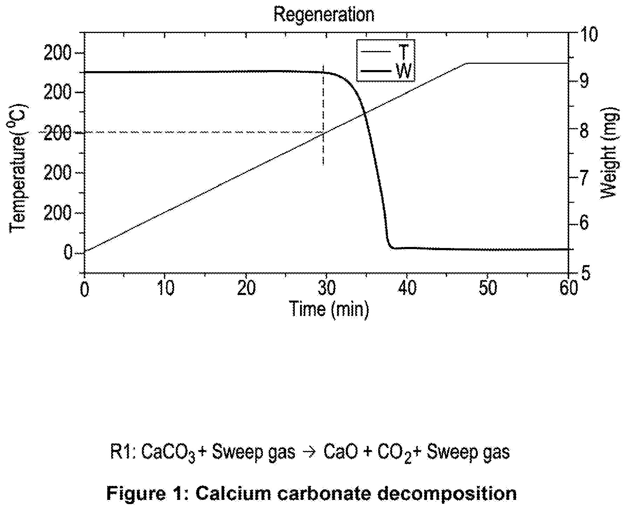

The results of the preliminary experiments using a thermogravimetric analyser (TGA) are set out below. The raw material used in the experiment was calcium carbonate (CaCO₃) which was decomposed to CaO and CO₂ by maintaining appropriate CO₂ partial pressure in the reactor. It can be seen from the Temperature/Time graph in Figure 1 that under certain CO₂ partial pressure, CaCO₃ started decomposing at 600°C (indicated by the dotted line). The kinetics are found to be reasonably fast at temperatures between 650-700°C.

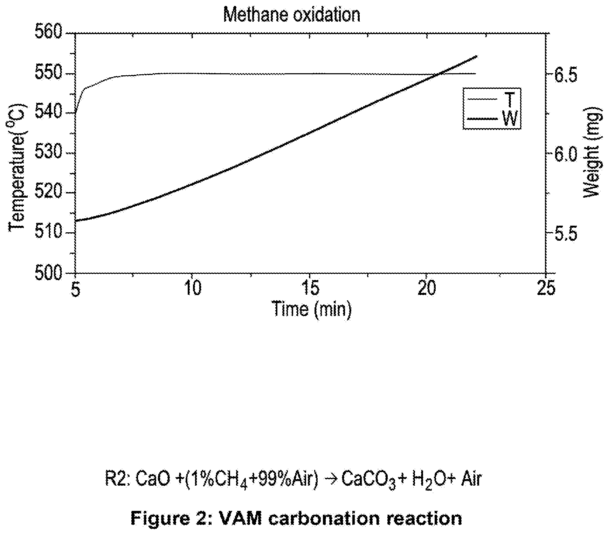

As shown in Figure 2, the reduced calcium carbonate which is converted to CaO then was carbonized back in the presence of VAM at a temperature of 550°C which is well below the auto ignition temperature of methane. This may be due to catalytic effect of CaO on methane combustion and simultaneous capture of CO₂ as CaCO₃.

Five examples of general reactor prototypes/layouts are given below.

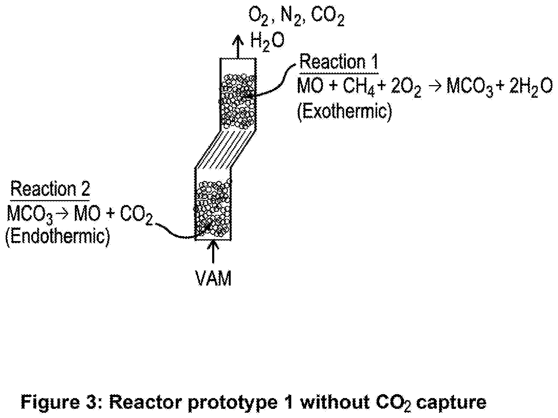

The reactor prototype 1 as shown in Figure 3 is a lamella type reactor in which the combustion + carbonation reactions occur in upper zone as described by reaction 1. The mineral/metal carbonates formed will fall down into a bottom zone due to increased density where decomposition reaction 2 occurs. This reactor prototype does not provide an option of CO₂ capture in gaseous form. This only provides an option of CO₂ capture by mineral carbonation by passing several types of minerals as described above in once through mode.

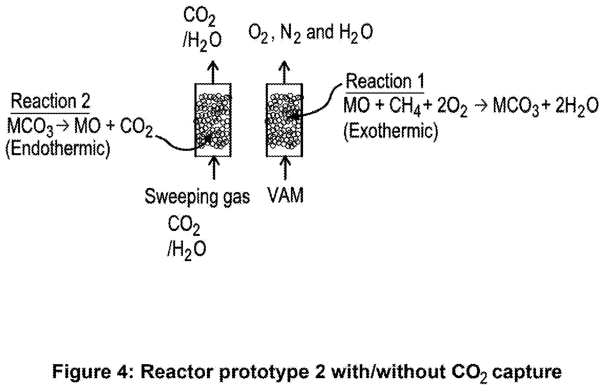

The reactor prototype 2 as shown in Figure 4 is a fixed bed reactor in which the combustion + carbonation reactions occur in one bed and the regeneration by decomposition in another. The gases will be switched between two reactor beds as soon as the reactions are accomplished. This design can be used both with or without CO₂ capture, both as gaseous CO₂ capture or mineral carbonation (i.e. if one bed is used).

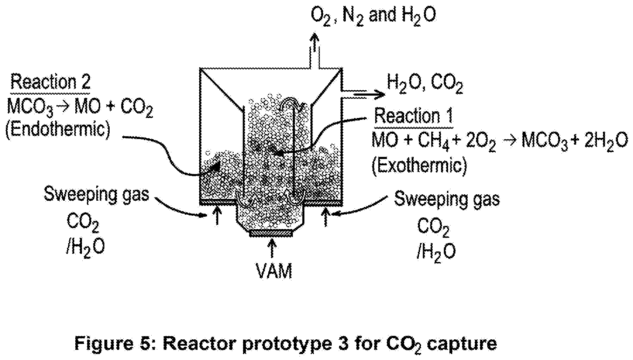

The reactor prototype 3 as shown in Figure 5 is a novel double pipe reactor in which the combustion + carbonation reactions and decomposition are conducted in separate reactors. Instead of gas switching, mineral/metal oxide particles are circulated between the two reactors. This design can be effectively used for gaseous CO₂ capture.

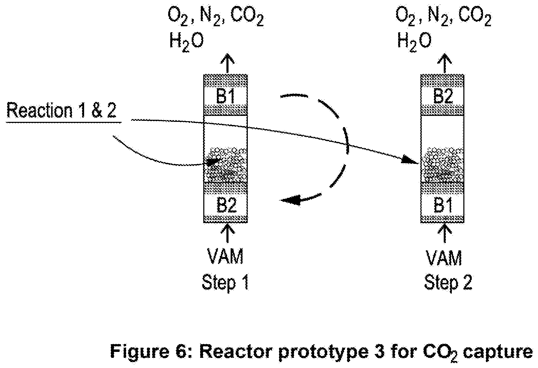

The reactor prototype 4 as shown in Figure 6 is illustrating the use of heat storage/transfer media made of ceramic and silica gel in the MCLR/SDLR processes.

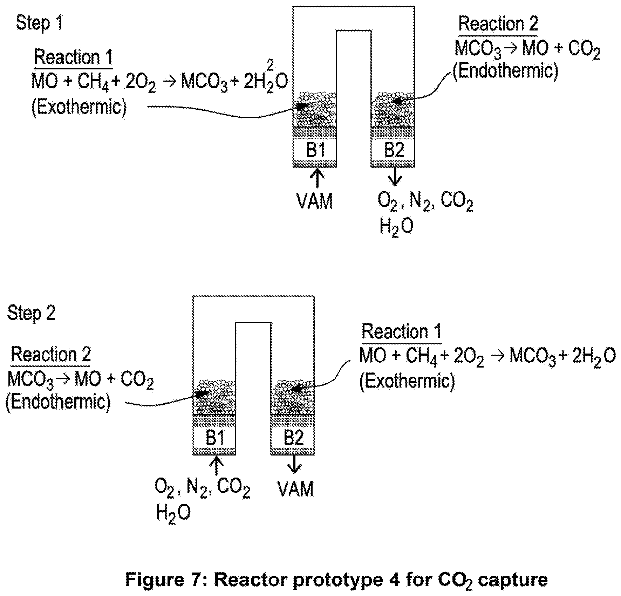

The reactor prototype 5 as shown in Figure 7 is another example of the use of heat storage/transfer media made of ceramic and silica gel in the MCLR/SDLR processes.

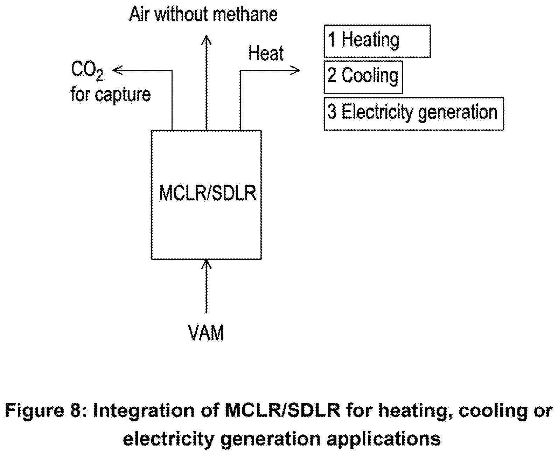

Figure 8 shows the integration of MCLR or SDLR where additional heat available from the processes is used for heating, electricity or cooling applications.

Figure 9 shows how available heat from solar sources and steam input can be utilized with the process to create additional steam or supercritical fluid that may be used for heating, cooling or electricity generation while capturing CO2. The carbonation reactor CAR (1) utilizes combustion and carbonation in reaction 1 (see paragraphs 33 and 34) to exchange heat with the Calcination Reactor CAL (2) utilizing the regeneration reaction, while additional heat is provided from solar sources (6) to boost the temperatures in the transfer from CAR to CAL and in the CAL reactor. Additional heat exchangers HE1 and HE2 (3,4 & 5) are also employed in this process.

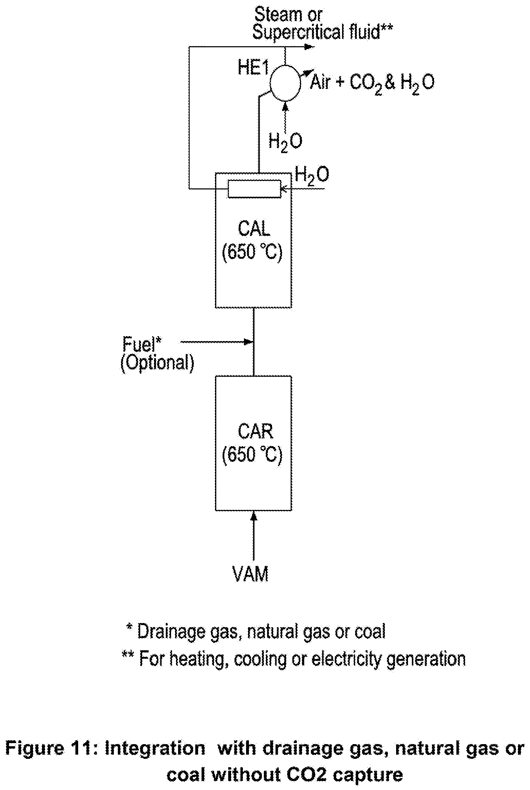

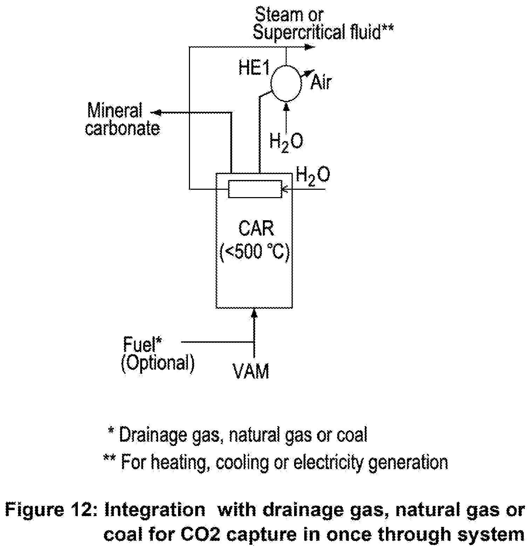

Figures 10, 11 and 12 show how drainage gas, natural gas, or coal can similarly be used to provide the additional heat source both with and without CO2 capture.

The MCLR process has many advantages over other VAM mitigation processes including:
i) Low temperature operation which reduces fire and explosion risk associated with high temperature processes such as TFRR, CFRR and CMM.
ii) It works at lower VAM concentrations (i.e. < 0.05 CH4 in VAM).
iii) Low cost raw material (i.e. stone dust-rich in calcium) is readily available at mine sites. (In the case of CFRR, CMM and Chemical looping VAM, catalysts or oxygen carriers are needed and there will be issues of their fabrication, handling and stability for long term cyclic operation while minerals as CO₂ scavengers are very low-cost and stable).
iv) Reuse of the raw material with minimal treatment which eliminates the waste generation and disposal costs.
v) Highly tolerant to moisture and dust environment compare to catalysts and ceramic pellets.
vi) Lower energy footprints due to low temperature operation.
vii) No issues in terms of acceptability and handling at coal mine sites.
viii) Nearly zero emission process which provides an option to capture, store or use CO₂.

## Claims

1. A method of removing methane from ventilation air including the steps of:
i) reacting a ventilation air methane stream with a carbon dioxide scavenger to form a mineral carbonate; and
ii) decomposing the mineral carbonate back to a mineral or mineral oxide.

2. A method of removing methane from ventilation air as claimed in claim 1, wherein step i) is performed in a carbonation reactor and step ii) is performed in a separate calcination reactor, with carbon dioxide being captured from the calcination reactor.

3. A method of removing methane from ventilation air as claimed in claim 1, wherein step i) and step ii) occur at the same temperature, without carbon dioxide capture.

4. A method of removing methane from ventilation air as claimed in claim 3, wherein step i) and step ii) occur in the same reactor.

5. A method of removing methane from ventilation air as claimed in any one of the preceding claims, wherein the decomposed mineral carbonate is reused as the carbon dioxide scavenger in step i).

6. A method of removing methane from ventilation air as claimed in any one of the preceding claims, wherein metal or metal oxides having a carbonation tendency are used as the carbon dioxide scavenger.

7. A method of removing methane from ventilation air as claimed in any one of the preceding claims, wherein the carbon dioxide scavenger is a mineral or mineral waste having a carbonation tendency.

8. A method of removing methane from ventilation air as claimed in either claim 6 or claim 7, wherein any of the metal, metal oxides, mineral or mineral waste having a carbonation tendency is used once only in the reaction process.

9. A method of removing methane from ventilation air as claimed in any one of claims 1 to 4, wherein the carbon dioxide scavenger is formed by stone dust rich in calcium carbonate.

10. A method of removing methane from ventilation air as claimed in claim 9, wherein the stone dust is sourced from or adjacent to a mine site where the ventilation air methane is generated.

11. A method as claimed in any one of the preceding claims, wherein additional heat generated during the reaction process, is used for electricity generation or heating or cooling purposes.

## Patentansprüche

1. Verfahren zum Entfernen von Methan aus Belüftungsluft, folgende Schritte beinhaltend:
i) Verreagieren eines Belüftungsluft-Methanstroms mit einem Kohlenstoffdioxidfänger, um ein mineralisches Carbonat zu bilden, und
ii) Abbauen des mineralischen Carbonats zu einem Mineral oder zu mineralischem Oxid.

2. Verfahren zum Entfernen von Methan aus Belüftungsluft nach Anspruch 1, wobei Schritt i) in einem Karbonatisierungsreaktor durchgeführt wird und Schritt ii) in einem separaten Kalzinierungsreaktor durchgeführt wird, wobei Kohlenstoffdioxid aus dem Kalzinierungsreaktor aufgefangen wird.

3. Verfahren zum Entfernen von Methan aus Belüftungsluft nach Anspruch 1, wobei Schritt i) und Schritt ii) bei der gleichen Temperatur stattfinden, ohne Kohlenstoffdioxid aufzufangen.

4. Verfahren zum Entfernen von Methan aus Belüftungsluft nach Anspruch 3, wobei Schritt i) und Schritt ii) im gleichen Reaktor stattfinden.

5. Verfahren zum Entfernen von Methan aus Belüftungsluft nach einem der vorhergehenden Ansprüche, wobei das abgebaute mineralische Carbonat in Schritt i) als Kohlenstoffdioxidfänger wiederverwendet wird.

6. Verfahren zum Entfernen von Methan aus Belüftungsluft nach einem der vorhergehenden Ansprüche, wobei Metall oder Metalloxide mit einer Karbonatisierungsneigung als Kohlenstoffdioxidfänger verwendet werden.

7. Verfahren zum Entfernen von Methan aus Belüftungsluft nach einem der vorhergehenden Ansprüche, wobei der Kohlenstoffdioxidfänger ein Mineral oder mineralischer Abfall mit einer Karbonatisierungsneigung ist.

8. Verfahren zum Entfernen von Methan aus Belüftungsluft nach Anspruch 6 oder Anspruch 7, wobei ein beliebiges von dem Metall, den Metalloxiden, dem Mineral oder dem mineralischen Abfall mit Karbonatisierungsneigung nur einmal in dem Reaktionsprozess verwendet wird.

9. Verfahren zum Entfernen von Methan aus Belüftungsluft nach einem der Ansprüche 1 bis 4, wobei der Kohlenstoffdioxidfänger aus Steinstaub gebildet ist, der reich an Kalziumkarbonat ist.

10. Verfahren zum Entfernen von Methan aus Belüftungsluft nach Anspruch 9, wobei der Steinstaub aus einem Bergwerk oder dessen Nachbarschaft stammt, wo das Belüftungsluftmethan erzeugt wird.

11. Verfahren nach einem der vorhergehenden Ansprüche, wobei zusätzliche Wärme, die während des Reaktionsprozesses erzeugt wird, zur Erzeugung von Elektrizität oder zu Heiz- oder Kühlungszwecken verwendet wird.

## Revendications

1. Procédé d'élimination du méthane de l'air de ventilation comprenant les étapes consistant à :
i) faire réagir un courant de méthane de l'air de ventilation avec un absorbeur de dioxyde de carbone pour former un carbonate minéral ; et
ii) décomposer le carbonate minéral en un minéral ou un oxyde minéral.

2. Procédé d'élimination du méthane de l'air de ventilation selon la revendication 1, dans lequel l'étape i) est réalisée dans un réacteur de carbonatation et l'étape ii) est réalisée dans un réacteur de calcination séparé, le dioxyde de carbone étant recueilli à partir du réacteur de calcination.

3. Procédé d'élimination du méthane de l'air de ventilation selon la revendication 1, dans lequel l'étape i) et l'étape ii) sont réalisées à la même température, sans recueil de dioxyde de carbone.

4. Procédé d'élimination du méthane de l'air de ventilation selon la revendication 3, dans lequel l'étape i) et l'étape ii) se déroulent dans le même réacteur.

5. Procédé d'élimination du méthane de l'air de ventilation selon l'une quelconque des revendications précédentes, dans lequel le carbonate minéral décomposé est réutilisé comme absorbeur de dioxyde de carbone à l'étape i).

6. Procédé d'élimination du méthane de l'air de ventilation tel que revendiqué dans l'une quelconque des revendications précédentes, dans lequel un métal ou des oxydes métalliques ayant une tendance à la carbonatation sont utilisés comme absorbeur de dioxyde de carbone.

7. Procédé d'élimination du méthane de l'air de ventilation, tel que revendiqué dans l'une quelconque des revendications précédentes, dans lequel
l'absorbeur de dioxyde de carbone est un minéral ou un déchet minéral ayant une tendance à la carbonatation.

8. Procédé d'élimination du méthane de l'air de ventilation selon la revendication 6 ou la revendication 7, dans lequel l'un quelconque des métaux, oxydes métalliques, minéral ou déchet minéral ayant une tendance à la carbonatation est utilisé une seule fois dans le processus de réaction.

9. Procédé d'élimination du méthane de l'air de ventilation selon l'une quelconque des revendications 1 à 4, dans lequel l'absorbeur de dioxyde de carbone est formé par de la poussière de pierre riche en carbonate de calcium.

10. Procédé d'élimination du méthane de l'air de ventilation selon la revendication 9, dans lequel la poussière de pierre provient d'un site minier ou est adjacente à un site minier où le méthane de l'air de ventilation est généré.

11. Procédé selon l'une quelconque des revendications précédentes, dans laquelle la chaleur supplémentaire générée pendant le processus de réaction est utilisée pour la production d'électricité ou à des fins de chauffage ou de refroidissement.
